# EUROPEAN PATENT SPECIFICATION

(11) **EP 1 483 992 B1**
(45) Date of publication and mention of the grant of the patent: **27.07.2005**
(21) Application number: 02708378.1
(22) Date of filing: 08.03.2002
(51) Int. Cl.: A47J 31/40

(54) **AUTOMATED COFFEE BREWING DEVICE**
AUTOMATISCHE KAFFEEZUBEREITUNGSVORRICHTUNG
MECANISME AUTOMATIQUE DE PREPARATION DE CAFE

(43) Date of publication of application: 08.12.2004
(73) Proprietor: AZKOYEN INDUSTRIAL, S.A., E-31350 Peralta (Navarra) (ES)
(72) Inventor: ARCELUS LECUMBERRI, Lorenzo, E-31007 Pamplona (ES)
(74) Representative: Carvajal y Urquijo, Isabel
(86) International application number: PCT/ES2002/000105
(87) International publication number: WO 2003/075725

(56) References cited:
- EP-A- 0 309 780
- EP-A- 0 659 377
- DE-A- 19 841 880
- ES-T- 2 078 720
- US-A- 5 471 910

## Description

The present invention relates to an automated device for brewing express coffee, intended for its use in coffee makers being provided with a brewing chamber to which the ground coffee is carried and to which hot pressurised water is supplied, which then passes through the ground coffee to obtain the infusion.

More specifically, the device of the invention is of the type having a structure which comprises a rotating spindle that cannot move in an axial sense and is provided with a nut connected to a moving carriage, which carriage is provided with a through cavity parallel to the spindle that can be closed on the top and bottom by pistons to define a brewing chamber.

Swiss patent 641030 (EP 0061472) describes a coffee maker with a brewing device of the above-described type, in which the pistons that can close the brewing chamber are driven hydraulically, which makes the system complex and considerably increases the cost of the coffee maker.

EP 0528757 describes a brewing device for a coffee maker which comprises a brewing cylinder with a perforation that can be closed by two pistons in order to define the brewing chamber, with one of these pistons fixed and placed opposite the perforation and with the cylinder and the other piston free to move axially. The cylinder engages a parallel spindle, so that when the latter rotates in one sense or another the cylinder will move in the desired sense. Document US-5471910 discloses the preamble of claim 1.

With the above-described construction the fixed cylinder prevents the axial loading of coffee powder, so that a retractable, inclined pivoting funnel must be provided to load the coffee.

In addition, the movable piston is mounted on a tubular projection attached to the frame of the machine, with interposed gaskets which must provide a greater friction than the friction between said piston and the perforation of the brewing cylinder. This arrangement complicates the assembly and operation of the system, and can furthermore result in operational problems and cause frequent malfunctions.

The object of the present invention is to eliminate the above-described problems by means of an automated brewing device which allows the direct axial loading of coffee powder to the brewing chamber without requiring funnels or lateral loading ramps.

A further object of the invention is to simplify the operational system of the moving plunger or piston, so that when it is locked in place or free to move its position is secured at all times by sturdy elements which cannot malfunction.

Also an object of the invention is to simplify the tasks of assembling and disassembling the automated brewing device in the coffee maker, while also allowing it to be mounted in several arrangements which optimise its position according to the desired configuration of the coffee maker.

The brewing device of the invention is of the type described initially and comprises a structure in which a revolving spindle is mounted without freedom to move axially. This spindle is provided with a nut that is laterally connected to a carriage, which carriage is driven along by the nut during the axial motion of said nut. This carriage has a through cavity parallel to a spindle, the cavity being closed on the bottom by a lower piston that can move partially within said cavity, and is closed on the top by an independent upper piston, so that the brewing chamber is thereby determined between the two pistons.

In accordance with the invention, the upper piston is mounted on a support that can turn about the spindle between an operative position, in which the piston is opposite the carriage cavity, and an inactive position in which said piston is out of the projection of the cavity. This support also holds a tube for loading the ground coffee, which can turn together with the support between a loading position, in which it is aligned with the chamber and its top mouth, and an inactive position in which it is no longer in this alignment. In the first position of the loading tube the upper piston is in its inactive position, while in the second position of the loading tube the piston is in its operative position.

In the device of the invention both the upper piston and the lower piston are provided with ducts for water inlet and infusion outlet, such that this operation can be performed both upwards and downwards.

In addition, the brewing chamber and the entire brewing circuit can be heated so that the coffee infusion may be obtained at any time at the desired temperature, with this temperature kept constant for each infusion. Heating can be obtained by steam injection, by an electrical resistance or by any other heat source.

The bottom piston extends downwards as a tubular shaft that ends with a bottom widening provided with a peripheral groove, to which may be coupled an elastic blocking element which acts when the nut and the carriage reach their lowermost position. This bottom widening of the shaft acts on the blocking element and causes it to deform elastically, so that it is inserted in the groove or released from it as the widening is pushed downwards by the carriage or as the piston is pushed upwards by the same carriage, always with a force greater than the frictional force between the piston and the carriage cavity.

Above the cavity defined in the carriage, the structure of the brewing device of the invention is provided with an opening placed opposite said cavity, through which the coffee powder is poured when the loading tube is situated opposite said cavity.

The upper support that bears the upper piston and the loading tube is part of a C-shaped part which has a central segment that runs parallel to the spindle on the opposite side to the carriage, as well as side segments that are perpendicular to the spindle axis and which can turn freely about said spindle, with the upper segment having an overhanging projection from which the upper piston and the loading tube are suspended.

The nut that provides the motion of the carriage comprises two parallel threaded rings joined by an external axial rib by which the nut is connected to a cam. This cam controls their motion by causing a rotation or an axial displacement when it reaches certain positions. The cam consists of an approximately semi-cylindrical wall mounted around the spindle on the side opposite the carriage and co-axial to said spindle, with the central segment of the above-mentioned C-part running outside this wall. The wall that determines this cam is provided with two axial grooves on the surface facing the spindle, placed at different heights, out of alignment and having equal widths. The upper groove and the bottom groove are separated by an intermediate window with a height approximately equal to that of the rib that joins the two rings of the nut. This window is limited on its top and bottom by parallel helical ramps, with the upper groove ending at the window at the highest point of the upper helical ramp and the bottom groove ending at the lowest point of the bottom ramp. The angular separation between the two axial grooves is the same as the angle turned by the upper support between the coffee-loading and brewing positions. The central segment of the C-shaped support is provided with an intermediate axial groove having a width equal to that of the grooves of the semi-cylindrical wall and a lower height than the window of said wall. This groove enters in the window to receive the rib that joins the nut rings as when said rib is opposite the top or bottom groove of the semi-cylindrical wall, thereby allowing the nut to turn while also making it move in an axial sense as defined by the helical ramps which limit the window on the top and bottom.

The height of the upper groove of the semi-cylindrical wall will correspond to the axial run of the nut when the carriage moves between its top limiting position and the coffee-loading position or vice versa, while the height of the lower groove corresponds to the axial run of the nut between the bottom limiting position of the carriage and the coffee-loading position or vice versa.

The elastic blocking element in the widening of the lower piston shaft can consist of two rods secant to an opening located at the bottom part of the structure, in a position opposite the shaft of the lower piston. This opening has a width that is larger than the bottom widening of the shaft, and it is placed at the height reached by the widening when the spindle nut and the carriage reach their lowermost position. These rods define an opening with a width that is slightly smaller than the widening of the shaft, and they are elastically deformed as they are pushed by said widening until they reach its same width.

The carriage that defines the brewing chamber is provided on its upper base with a guillotine connected to a drive mechanism that causes it to move transversally on said base between a retracted position, in which it is behind the outlet mouth of the carriage cavity, and an anterior position in which it is in front of said opening. As it moves from the retracted position to the anterior position it pushes the hammer, which has been previously ejected from the brewing chamber.

All of the above described characteristics and other characteristics of the invention, as set forth in the claims, are described below in greater detail with the aid of the accompanying drawings, in which a non-limiting example of embodiment is shown.

In the drawings:
Figure 1 is a perspective view of an automated brewing device for coffee machines constructed in accordance with the invention.
Figure 2 is a vertical cross section of the brewing device along the line II-II of figure 1.
Figure 3 is a section similar to that of figure 2, simplified and along the line III-III of figure 4, with the device in a resting state.
Figure 4 is a cross section along the line IV-IV of figure 3.
Figure 5 is a view similar to figure 3, with the device in a loading position.
Figure 6 is a view similar to figure 3, with the device in a compression position for brewing coffee.
Figure 7 is a view similar to figure 3, showing the carriage in a lowered position for cleaning.
Figures 8 to 10 are views similar to figure 3, showing the device in successive cleaning stages.
Figures 11 and 12 are cross-sections along the line XI-XI of figure 3, showing the upper support in its extreme positions.
Figure 13 is a perspective view of the C-shaped part of which the upper support forms part.
Figure 14 is a perspective view of the rear wall with the cam that defines said wall.
Figure 15 is a perspective view of the nut mounted on the spindle.
Figure 16 is a perspective view of the carriage that defines the brewing chamber.
Figures 17 to 24 show successive views of the cam of the wall of figure 14 in different relative positions of the cam, the C-part of figure 13 and the rib of the nut of figure 15.

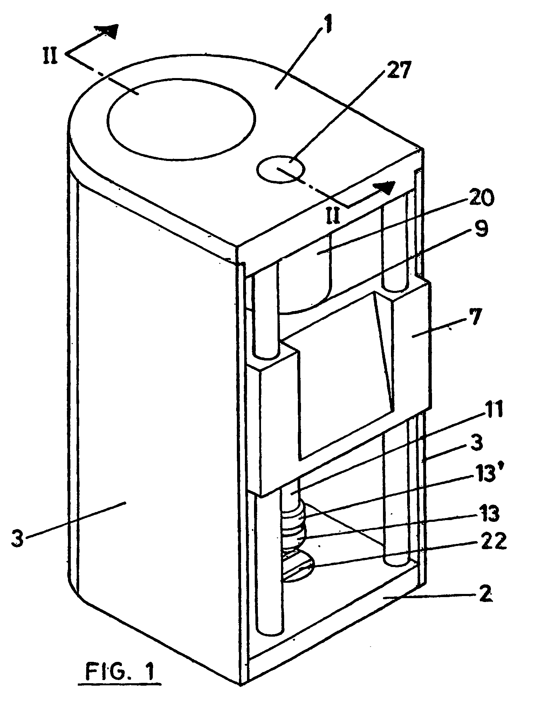

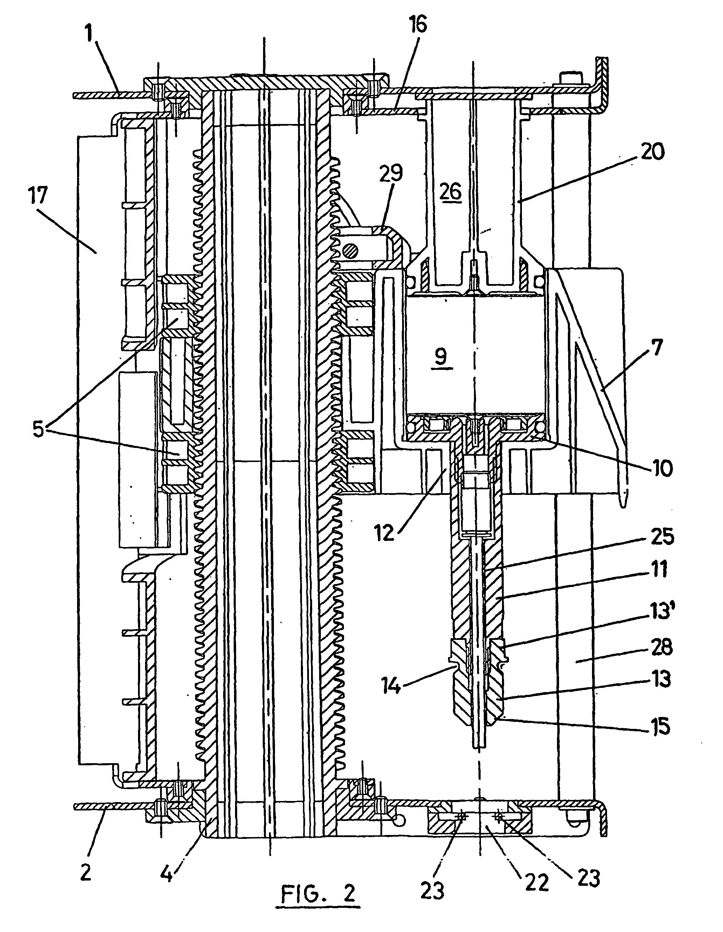

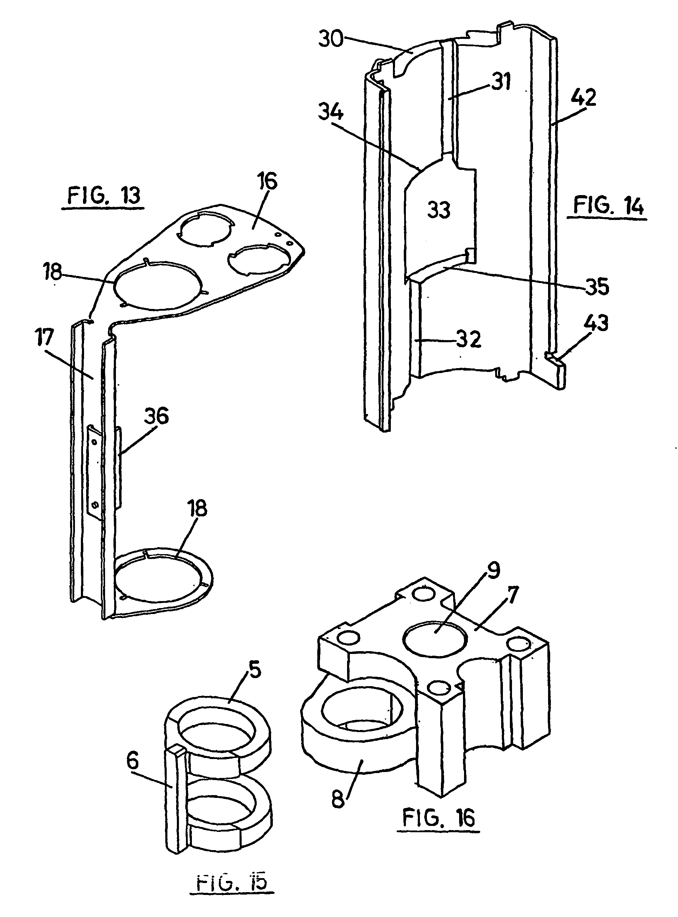

The automated device for brewing coffee of the invention comprises a structure that, in the example shown in figure 1, consists of an upper plate 1, a lower plate 2 and side walls 3. Mounted inside this structure, and as seen best in figure 2, is a revolving spindle 4 that cannot move axially and which bears a nut 5, shown in perspective in figure 15. This nut comprises two threaded rings joined by an axial rib 6; attached to the side of this nut is a carriage 7, provided with a rear ring 8 through which can pass freely the spindle 4, and which is meant to be inserted between the rings of the nut 5, as can be seen in figures 2, 15 and 16. The carriage 7 is also provided with a cavity 9 parallel to the spindle 4 and which is open on the top. This cavity houses a piston 10 that may move longitudinally inside said cavity, and which extends on the bottom as a shaft 11 which projects out through the orifice 12 on the bottom of the cavity 9. At the end of the shaft 11 is a widening 13 with a peripheral groove 14 and which at its free end has a conical segment 15.

At the top end of the spindle 4, on a cylindrical segment of this spindle, is mounted a support 16 that is part of a C-shaped part 17, the lateral segments of the latter being provided with openings 18 through which pass the end segments of the spindle 4, which are not threaded, so that the part 17 can turn freely about said spindle. Its upper end forms an overhanging projection in the form of a support 16, which bears an upper piston 20 and a loading tube 21, figures 2 to 5.

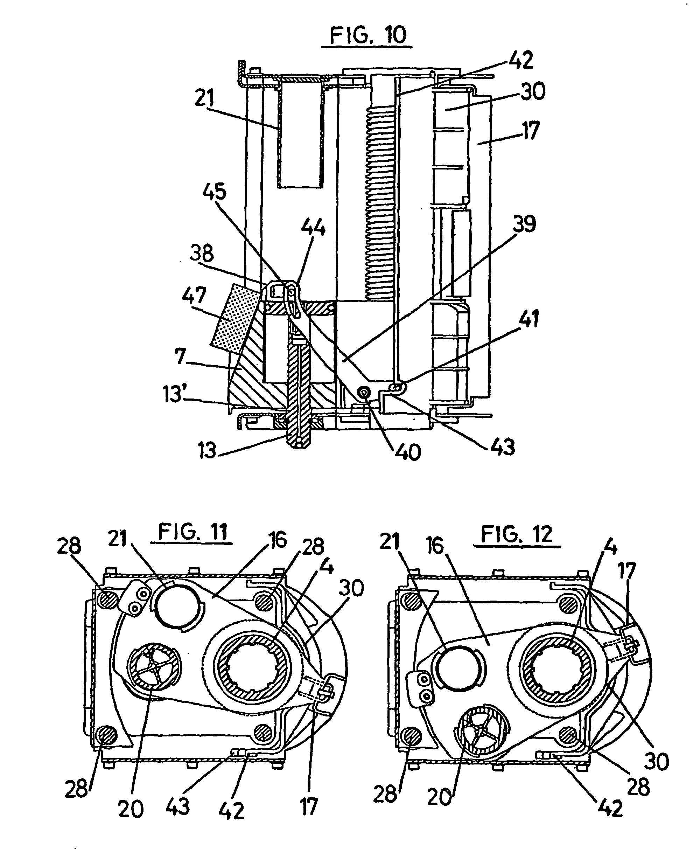

The C-shaped part 17 and therefore the support 16 can revolve between two extreme positions: one for loading coffee, as shown in figure 12, in which the coffee-loading tube 21 is placed opposite the cavity 9 of the carriage 7, while the upper piston 20 is placed out of the projection of said cavity; and a brewing position as shown in figure 11, in which the upper piston 20 is opposite the cavity 9 of the carriage 7 and the loading tube 21 is left out of the projection of said cavity.

The bottom plate 2 of the structure is provided with an opening 22 with a slightly larger perimeter than the widening 13 of the shaft 11. This opening is crossed by two rods 23 which occupy diametrically opposite positions and are separated from each other by a distance that is less than the width of the groove 14 of the shaft 16. These rods are elastically deformable, so that they can act as a blocking element when receiving the groove 14 of the aforementioned widening.

Both the bottom piston 10 and the upper piston 20 are provided with ducts 25 and 26 allowing water to enter and the infusion to leave in any sense.

As can be seen in figure 1, in a position opposite the cavity 9 the top plate is provided with an opening 27 so that the loading tube 21 will be opposite this opening when it reaches the coffee-loading position.

The carriage 7 is guided in its vertical motion by the columns 28.

Between the spindle 4 and the C-shaped part 17 there is provided a wall 30, as shown in perspective in figure 14, which defines a cam for controlling the motion of the nut 5, so that this nut will rotate or move in a linear sense when it reaches certain positions. Said cam consists of two axial grooves 31 and 32, located on the surface opposite the spindle, at different heights and not aligned with each other, with the two grooves having the same width that is slightly greater than that of the rib 6 of the nut 5. These two grooves are separated by an intermediate window 33, the height of which is approximately the same as that of the rib 6. This opening is limited on the top and bottom by parallel helical ramps 34 and 35, with the upper groove 31 ending at the window 33 at the highest point of the upper helical ramp 34, while the bottom groove 32 ends at the window 33 at the lowest point of the bottom ramp 35. The angular separation between the two grooves 31 and 32 is approximately the same as the turning angle of the upper support 16, and therefore of the C-shaped part 17, between the coffee-loading and brewing positions.

As may be seen in figure 13, the central segment of the C-shaped part 17 is provided with an intermediate axial groove 36 which has a width equal to that of the grooves 31 and 32 of the wall 30 and a lower height than the window 33 of said wall. This groove 36 enters through the window 33 to receive the rib 6 of the nut 5, when said rib is opposite the upper or lower groove of the wall 30, thereby allowing the nut to turn while also making it move in an axial sense as defined by the inclination of the helical ramps 34 and 35 which limit the window 33 on the top and bottom.

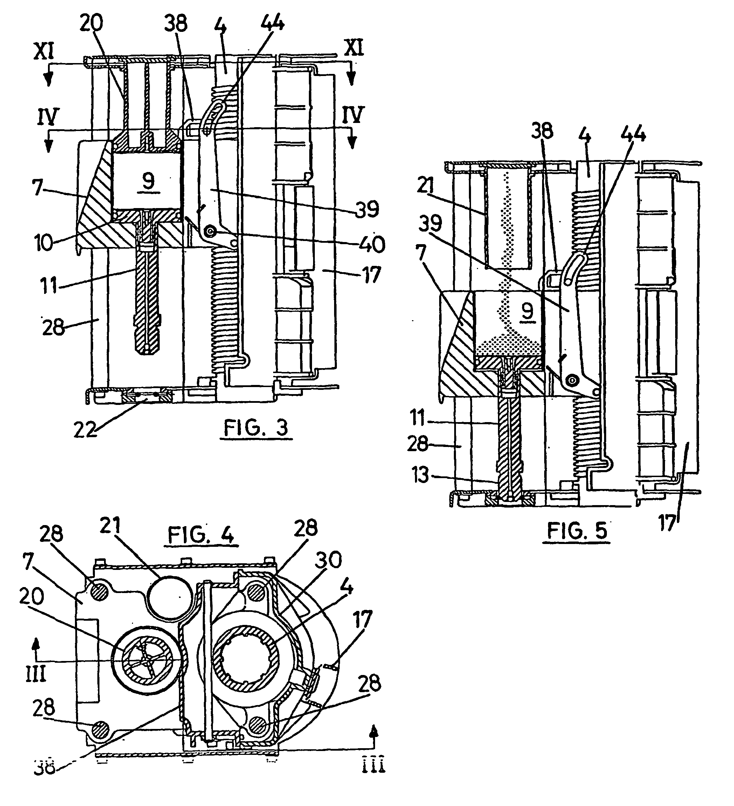

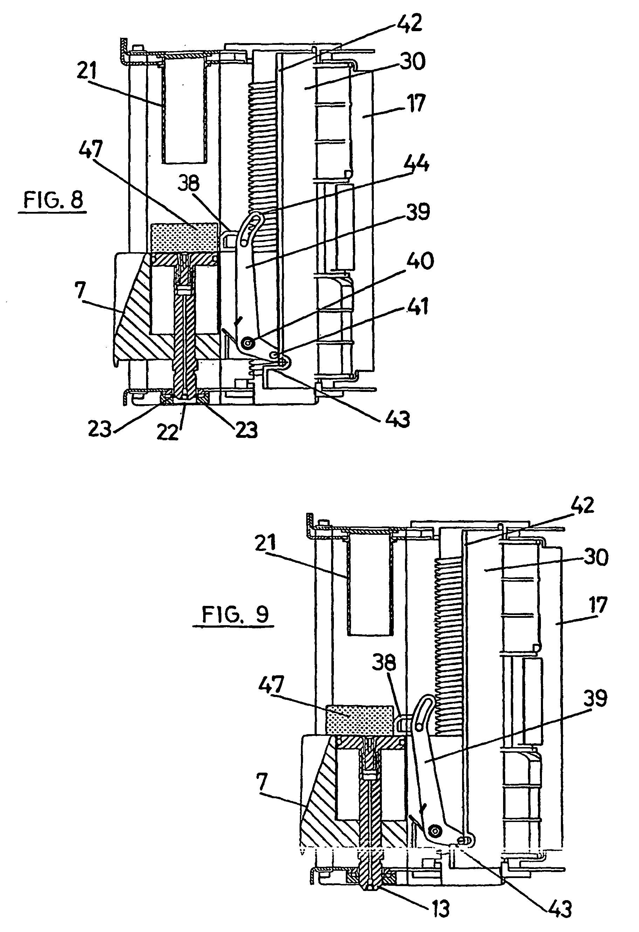

As can be seen in figures 3 to 10, the carriage is provided on its top base with a guillotine 38 that is related to a drive mechanism that causes it to move transversally on said base between a retracted position, figure 8, in which it is behind the outlet mouth of the cavity 9, and a forward position, figure 10, in which it is in front of said opening.

Said drive mechanism for the guillotine 38 consists of an elbowed lever 39 placed on a side of the carriage and hinged to it at its elbow by a shaft 40.

The segment of the lever that remains under this hinged shaft 40 is provided with a lateral stop 41 that, during the vertical motion of the carriage 7, rests on the edge 42 of the part 30 and that when the carriage reaches the bottom widening 13 of shaft 11, figure 9, meets a stop 43 formed by the aforementioned edge and thus making the lever 39 swivel until it reaches the position of figure 10. In its upper end the lever 39 is provided with an arched slot 44 through which it is hinged by means of a pivot 45 to the guillotine 38, so that it moves along the base of the carriage 7.

The device of the invention works as follows:

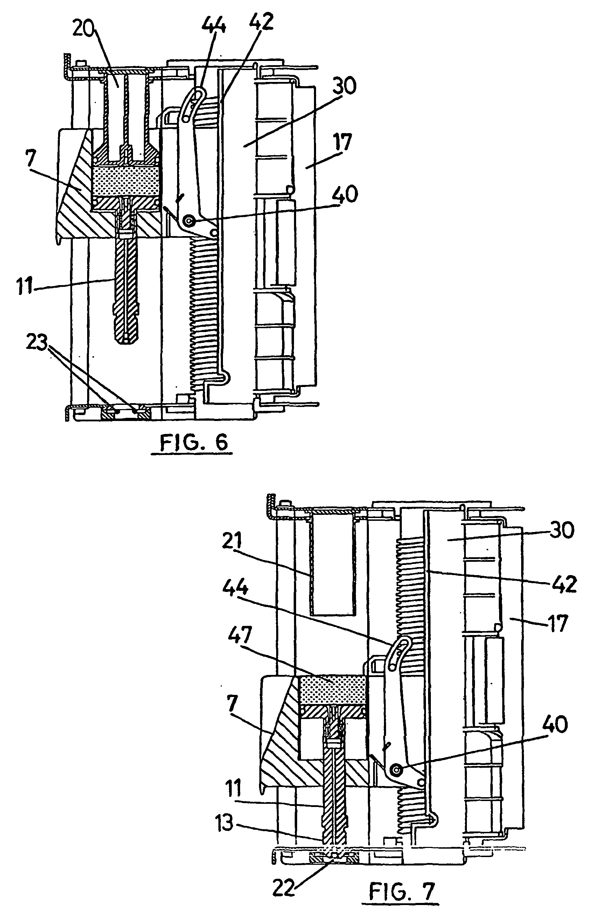

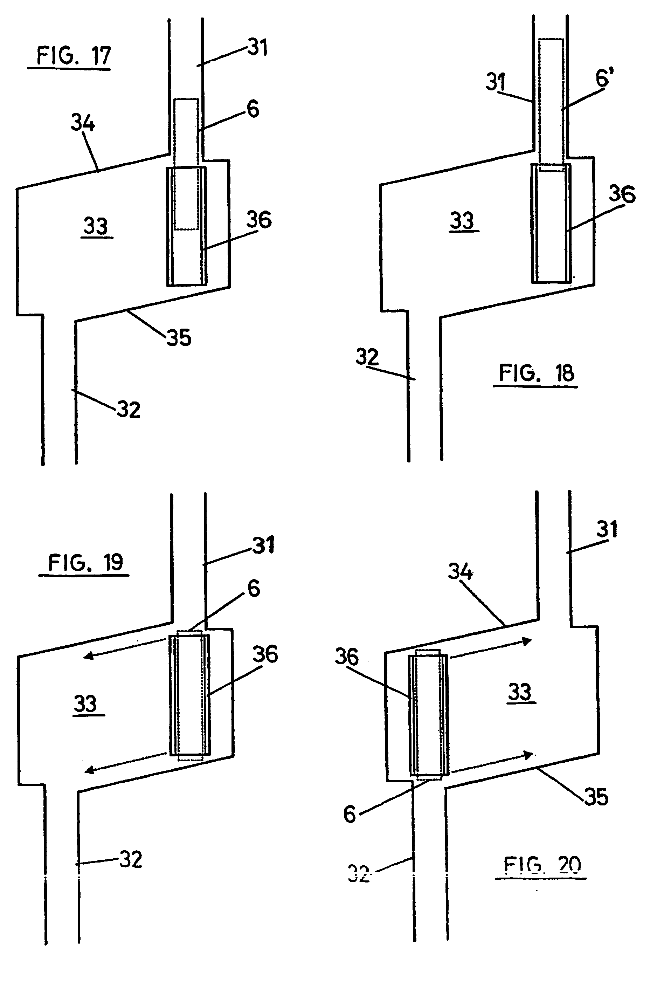

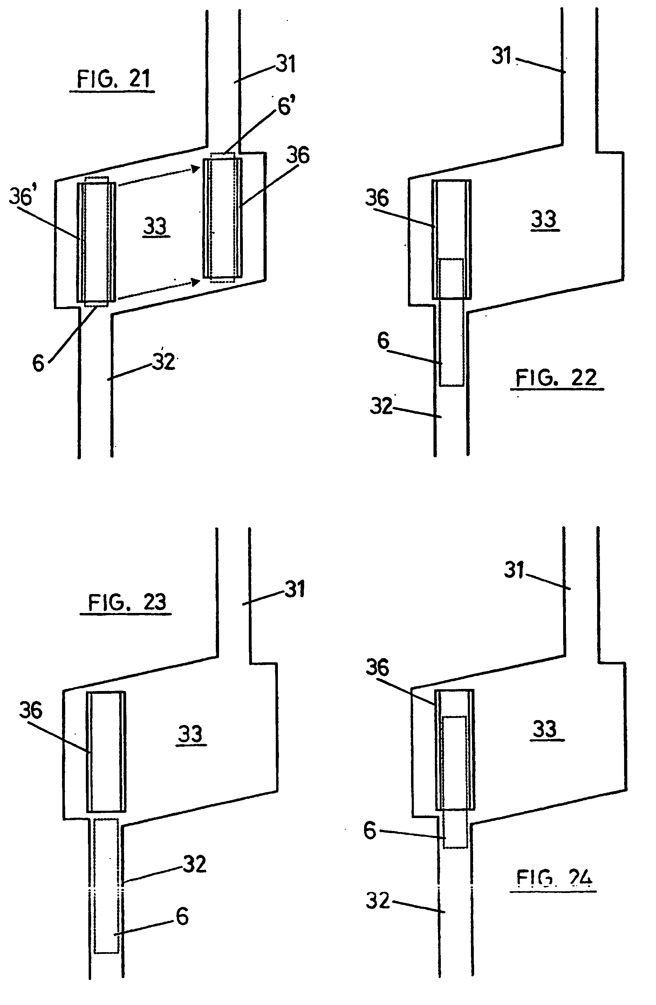

Figure 3 shows the device in a resting position, in which the groove 36 of the C-part 17 is inside the window 33, as shown in figure 17, with the rib 6 of the nut 5 housed partially in said groove 36 and partially in the upper groove 31 of the cam. To begin the coffee-brewing operation, the spindle 4 is turned, making the carriage 7 descend together with the nut 5 until the rib 6 is placed in the window 33, as shown in figure 19, at which moment the groove 36 together with the C-part 17 move along the window 33 to the position 36', in which the loading tube 21 is left opposite the chamber 9, at which time the coffee is loaded. The spindle then turns in the opposite sense and again moves the groove of the C-part from the position 36' to the position 36 of figure 21, so that the rib 6 is left opposite the upper groove 31, and then moves along it until it reaches its extreme upper position in which the coffee is compressed and brewing begins, as shown in figure 6. The rib 6 reaches the extreme upper position as shown in figure 18. After compression and brewing the spindle 4 turns in the opposite sense, and the rib descends as far as the window 33, as shown in figure 19, and then moves along said window until it reaches the position shown in figure 20, in which the loading tube 21 is again placed opposite the chamber 9; as the spindle continues to turn the rib 6 will move downwards until reaching an extraction position of the hammer 47 and will continue to descend until said hammer is fully extracted, as shown in the successive positions of figures 7 to 9. When it reaches the position of figure 8, the carriage 7 rests on the widening 13 of the piston and pushes it downwards, at which moment the protruding end 41 of the lever 39 meets the stop 43, thereby making the lever 39 swivel to the position shown in figure 10, in which the hammer 47 falls outside the carriage. In this last position the widening 13 of the shaft 11 is retained in place by the rods 23 which determine the blocking element and which have entered the groove 14.

When the carriage 7 reaches the bottom extreme position, the rib 6 of the nut 5 will be in the position shown in figure 23. After this the spindle will turn in the opposite sense, the rib 6 will begin to rise and the guillotine 38 will move back to its retracted position. The shaft 11 is retained until the carriage 7 rises to meet the upper piston 10, carrying said piston and shaft upwards along with it until extracting the widening 13 of the stop defined by the rods 23, so that the rib 6 is again housed in the groove 36', figure 21, in which the loading occurs, and the rib and groove then move along the window 33 to the position 36 and 6', in which the carriage begins to move upwards towards the position for compression and brewing of figure 18. If no load has been received the rest position of figure 17 is reached and the process is begun as previously described.

As can be seen, by combining the turning motion of the spindle 4 in both senses and with the cam defined by the rear wall 33 and the grooves 31 and 32, as well as the groove 36 of the C-shaped part, the position of the cavity or brewing chamber 9 is related to the position of the upper piston 20 and the loading tube 21.

## Claims

1. Automated device for brewing express coffee, comprising a structure in which a revolving spindle (4) is mounted so that it cannot move axially and bears a nut (5) that is connected on its side to a carriage (7) that is movable along with said nut (5), the carriage (7) having a through cavity (9) that is parallel to the spindle (4) and that is closed on the bottom by a lower piston (10) that can move along part of said cavity (9); while on the top the cavity (9) can be closed by an upper piston (20) that cannot move axially, thereby defining a brewing chamber, whereby it comprises an upper support (16) mounted above the spindle (4) with an extension that overhangs above the carriage (7) in the form of a flat segment that bears the upper piston (20) and a loading tube (21), which support (16) may turn freely about the spindle between two extreme positions, one for loading the coffee, in which the loading tube (21) is placed opposite the cavity (9) of the carriage (7) and the upper piston (20) is placed out of the projection of said cavity (9), and a brewing position, in which the piston (20) is placed opposite the carriage cavity (9) and the loading tube (21) is out of the projection of said cavity (9); **characterized in that** the lower piston (10) extends downwards as a tubular shaft (11) which ends in a bottom widening (13) that is provided with a peripheral groove (14), in which can be coupled an elastic blocking element (23) when the nut (5) and carriage (7) reach their lowermost position; with the bottom widening (13) of the shaft (11) elastically acting on the blocking element (23) to deform it, so that the widening (13) is coupled in said groove (14) or released from it as the carriage (7) pushes the widening down or as it pushes the piston up, in every case exerting a force that is greater than the friction between the piston (10) and the carriage (7) cavity (9); with the two pistons (10,20) being provided with corresponding ducts (25,26) for water inlet and infusion outlet; and with the structure being provided above the carriage (7) with an opening opposite the carriage cavity (9), and with the loading tube (21) placed opposite said cavity (9) when it reaches the coffee-loading position.

2. Device according to claim 1, **characterized in that** said upper support (16) is part of a C-shaped part (17) which has a central segment that runs parallel to the spindle (4), and side segments that are perpendicular to the axis of the spindle (4) and are free to rotate about it, with the top segment determining the overhanging extension of the upper support (16) which bears the upper piston (20) and the loading tube (21).

3. Device according to claim 1, **characterized in that** said nut (5) is comprised of two parallel threaded rings joined by an external axial rib (6).

4. Device according to claim 1, **characterized in that** the elastic blocking element (23) is comprised of two rods that pass though an opening (22) of the bottom part (2) of the structure, at a position opposite the shaft (11) of the bottom piston (10), having a width that is slightly greater than the bottom widening (13) of said shaft (11), and is located at the height reached by the widening (13) when the spindle nut (5) and the carriage (7) reach their lowermost position; with these rods (23) defining an opening width that is slightly smaller than the shaft widening (13), and being elastically deformed by said widening until they match its width.

5. Device according to claim 1, **characterized in that** the aforementioned carriage (7) is provided on its top base with a guillotine (36) realted to a drive mechanism which makes the guillotine (38) move transversally along said base between a retracted position in which it is placed behind the outlet mouth of the carriage cavity (9) and an anterior position in which it is in front of said mouth.

6. Device according to claim 5, **characterized in that** the drive mechanism of the guillotine (38) consists of an elbowed lever (39) placed on a side of the carriage (7), and hinged to it at its elbow, and that is provided at the segment which is left below the hinge with a lateral projection which meets a stop (43) of the structure when the carriage (7) reaches the bottom widening (13) of the piston shaft (11), making the lever (39) swivel, while on its top end the lever (39) is attached to the guillotine (36) by an arched slot (44), thus making the latter move linearly along the upper base of the carriage (7) between its retracted and anterior positions or vice versa.

7. Device according to claims 5 and 6, **characterized in that** the guillotine (38) is connected to the carriage (7) by guides that run parallel to the top base of said carriage (7).

8. Device according to claims 1 and 2, **characterized in that** the nut (5) mounted on the spindle (14) is connected to a cam that controls its motion, so that it is turned or moves in a straight line when it reaches certain positions.

9. Device according to claims 1 and 8, **characterized in that** said cam is comprised of an approximately semi-cylindrical wall (30) mounted around the spindle (4) on the opposite side to the carriage (7) and coaxial with said spindle (4), with the central segment of the C-shaped part (17) running outside of and next to said wall; this wall is provided on the surface that faces the spindle (4) with two axial grooves (31,32) placed at different heights, not aligned with each other and having identical widths, with the upper groove (31) and the bottom groove (32) separated by an intermediate window (33) with a height approximately equal to that of the rib (6) that joins the two rings of the nut (5); and with this window (33) being limited on its top and bottom by parallel helical ramps (34,35), with the upper groove (31) ending at the window at the highest point of the upper helical ramp (34) and the bottom groove (32) ending at the lowest point of the bottom ramp (35), and with the angular separation between the two axial grooves being the same as the angle turned by the upper support (16) between the coffee-loading and brewing positions; and with the central segment of the C-shaped support (17) being provided with an intermediate axial groove (36) having a width equal to that of the grooves (31,32) of the semi-cylindrical wall (30) and a lower height than the window (33) of said wall (30), said groove (36) passing through the window (33) to receive the rib (6) that joins the nut rings when said rib (6) is opposite the top or bottom groove of the semi-cylindrical wall (30), thereby allowing the nut (5) to turn while it also moves in an axial sense as determined by the helical ramps (34,35) which limit the aforementioned window (33) on the top and bottom.

## Patentansprüche

1. Automatische Kaffeezubereitungsvorrichtung für Express-Kaffee, enthaltend eine Struktur, in welcher eine drehbare Spindel (4) derart angeordnet ist, dass diese axial nicht bewegbar ist und eine Nuss(5) trägt, welche seitlich mit einem Wagen (7) verbunden ist, welcher mit der genannten Nuss (5) bewegbar ist, wobei der Wagen (7) eine Durchgangsausnehmung (9) enthält, welche parallel zur Spindel (4) ist und am Boden durch einen unteren Kolben (10) geschlossen ist, welcher entlang eines Teils dieser Ausnehmung (9) bewegbar ist, während das obere Ende der Ausnehmung (9) durch einen oberen, axial nicht bewegbaren Kolben (20) abgeschlossen ist, wodurch die Zubereitungskammer definiert ist, wobei jene einen über der Spindel (4) angeordneten oberen Träger (16) mit einer Verlängerung enthält, welche den Wagen (7) in Form eines flachen Segments übergreift, welches den oberen Kolben (20) und ein Füllrohr 21 trägt, wobei der genannte Träger (16) um die Spindel zwischen zwei Extrem-Positionen um die Spindel frei gedreht werden kann und zwar in eine Einfüllposition des Kaffees, in welcher das Füllrohr (21) gegenüber der Ausnehmung (9) des Wagens (7) platziert ist und der obere Kolben (20) außerhalb der Projektion der genannten Ausnehmung (9) platziert ist, und ferner in einer Zubereitungsposition, In welcher der Kolben (20) gegenüber der Ausnehmung (9) des Wagens platziert ist und das Füllrohr (21) außerhalb der Projektion der genannten Ausnehmung (9) platziert ist,
**dadurch gekennzeichnet, dass** der untere Kolben (10) sich abwärts als ein rohrförmiger Schaft (11) erstreckt, welcher in einer Bodenerweiterung (13) endet, welche mit einer Umfangsnut (14) versehen ist, in welche ein elastisches Blockierelement (23) koppelbar ist, wenn die Nuss (5) und der Wagen (7) ihre unterste Position erreichen;
wobei die Bodenerweiterung (13) des Schafts (11) elastisch auf das Blockierelement (23) einwirkt, um dieses derart zu deformieren, dass die Erweiterung (13) des Schaftes (11) in die genannte Nut (14) gekoppelt oder von dieser freigegeben ist, sobald der Wagen (7) die Erweiterung nach unten stößt oder den Kolben nach oben stößt,
wobei in jedem Fall eine Kraft erzeugt wird, welche größer ist als die Reibung zwischen dem Kolben (10) und der Ausnehmung (9) des Wagens (7), wobei die beiden Kolben (10, 20) mit korrespondierenden Zuführungen (25, 26) für den Wassereinlaß und den Aufgußauslaß versehen sind, und wobei die Struktur oberhalb des Wagens (7) mit einer Öffnung gegenüber der Ausnehmung (9) des Wagens versehen ist und ferner das Füllrohr (21) gegenüber der genannten Ausnehmung (9) platziert ist, sobald diese die Kaffee-Einfüllposition erreicht hat.

2. Vorrichtung nach Anspruch 1, **dadurch gekennzeichnet, dass** der genannte obere Träger (16) Teil eines C-förmigen Teiles (17) ist, welcher ein zentrales, parallel zur Spindel (4) laufendes Segment und Seitensegmente aufweist, welche senkrecht zur Achse der Spindel (4) und um diese frei drehbar sind, wobei das obere Segment die überhängende Verlängerung des oberen Trägers (16) bildet, welcher den oberen Kolben und das Einfüllrohr (20) trägt.

3. Vorrichtung nach Anspruch 1, **dadurch gekennzeichnet dass** die genannte Nuss(5) aus zwei parallelen Ringen gebildet ist, welche mittels einer äußeren axialen Rippe (6) verbunden sind.

4. Vorrichtung nach Anspruch 1, **dadurch gekennzeichnet, dass** das elastische Blockierelement (23) aus zwei Stäben gebildet ist, welches durch eine Öffnung (22) des Bodenteils (2) der Struktur durchgreift in einer Position gegenüber dem Bodenkolben (10), welches eine Weite etwas größer als untere Erweiterung des Schaftes (11) aufweist und welches in einer Höhe angeordnet ist, welche von der Erweiterung (12) erreicht wird, wenn die Spindelnuss (5) und der Wagen ihre unterste Position erreichen,
wobei diese Stäbe (23) eine Öffnungsweite definieren, welche geringfügig kleiner ist als die Erweiterung (12) für den Schaft und welche elastisch durch die genannte Erweiterung deformiert werden bis sie in der Weite angepasst sind.

5. Vorrichtung nach Anspruch 1, **dadurch gekennzeichnet, dass** der vorgenannte Wagen (7) an seiner oberen Basis mit einer Guillotine (38) versehen ist, zugeordnet zu einem Antriebsmechanismus, mit welchem die Guillotine (38) transversal entlang der genannten Basis bewegbar ist, zwischen einer zurückgezogenen Position, in welche jene hinter einer Auslassmündung der Wagenöffnung (9) angeordnet ist und eine vordere Position, in welcher jene sich in Front der genannten Mündung befindet.

6. Vorrichtung nach Anspruch 5, **dadurch gekennzeichnet, dass** der Antriebsmechanismus der Guillotine (38) einen abgewinkelten, an einer Seite des Wagens (7) angeordneten Hebel aufweist und an jenem an dessen Winkelteil angelenkt ist, und dass jene an dem Segment vorgesehen ist, welches sich unterhalb des Gelenks mit einer lateralen Projektion befindet, welche einen Stopp (43) der Struktur erreicht, wenn der Wagen (7) die Bodenerweiterung (13) des Kolbenschaftes (11) erreicht, wobei der Hebel (39) gedreht wird, während an seinem oberen Ende der Hebel (39) mit der Guillotine (38) durch einen gebogenen Schlitz (34) in Berührung gelangt, wodurch der letztere linear entlang der oberen Basis des Wagens (7) zwischen seiner zurückgezogenen und seiner vorderen Positionen bewegt wird oder umgekehrt.

7. Vorrichtung nach Anspruch 5 und 6, **dadurch gekennzeichnet, dass** die Guillotine (38) mit dem Wagen (7) mittels Führungen verbunden ist, welche parallel zur oberen Basis des genannten Wagens (7) verlaufen.

8. Vorrichtung nach Anspruch 1 oder 2, **dadurch gekennzeichnet, dass** die Nuss (5) auf der Spindel (14) mit einem Mitnehmer verbunden ist, welcher deren Bewegung derart steuert, dass jene dreht oder sich in einer geraden Linie bewegt, wenn sie bestimmte Positionen erreicht ist.

9. Vorrichtung nach den Ansprüchen 1 und 8, **dadurch gekennzeichnet, dass** der genannte Mitnehmer eine näherungsweise halbzylindrische Wand (30) enthält, welche um die Spindel (4) auf der zum Wagen (7) gegenüberliegenden Seite und koaxial mit der genannten Spindel (4) angeordnet ist, mit einem zentralen Segment eines C-förmigen Teils (17) laufend außerhalb von und nahe zu der genannten Wand (8); diese Wand ist an der Oberfläche, welche benachbart der Spindel (4) angeordnet ist, mit zwei in unterschiedlichen Höhen angeordneten axialen Nuten versehen, welche nicht miteinander ausgerichtet und übereinstimmende Weiten aufweisen, wobei die obere Nut (31) und die untere Nut (32) durch ein dazwischen liegendes Fenster (33) getrennt sind mit einer Höhe näherungsweise gleich zu derjenigen der Rippe (6), welche in Eingriff steht mit den beiden Ringen der Nuss(5), und wobei dieses Fenster (33) an seiner Spitze und seinem Boden durch parallele schraubenförmige Rampen (34, 35) begrenzt ist, wobei die obere Nut (31) am Fenster an dem obersten Punkt der oberen schraubenförmigen Rampe (34) endet und die untere Nut (32) an dem tiefsten Punkt der unteren Rampe (35) endet und wobei der Winkelabstand zwischen den beiden axialen Nuten der gleiche ist wie der Winkel, um welchen der obere Träger (16) zwischen der Kaffee-Einfüll- und der Brühposition drehbar ist, und wobei das zentrale Segment des C-förmigen Trägers (17) mit einer dazwischen angeordneten axialen Nut (36) versehen ist, welche eine Weite gleich derjenigen der genannten Nuten (31, 32) der halbzylindrischen Wand (30) und eine geringere Höhe als das Fenster (33) der genannten Wand (30) aufweist, wobei ferner die Nut (36) durch das Fenster (33) durchgeführt ist, um die Rippe (6), welche mit den Ringen der Nuss in Eingriff steht, wenn die genannte Rippe (6) sich gegenüber der oberen oder der unteren Nut der halbzylindrischen Wand (30) befindet, wodurch der Nuss (5) die Drehung ermöglicht wird, während sie sich auch in axialer Richtung, wie vorgegeben durch die schraubenförmigen Rampen (34, 35) bewegt, welche das vorgenannte Fenster (33) an der Spitze und am Boden begrenzen.

## Revendications

1. Dispositif automatisé pour le brassage du café exprès, comprenant une structure dans laquelle une vis sans fin (4) est montée de telle sorte qu'elle ne puisse pas se déplacer axialement et soutient un écrou (5) qui est connecté sur son côté à un chariot (7) qui est mobile avec ledit écrou (5), le chariot (7) ayant une cavité traversante (9) qui est parallèle à la vis sans fin (4) et qui est fermée sur le bas par un piston inférieur (10) qui peut se déplacer le long de la partie de ladite cavité (9), alors que sur le dessus la cavité (9) peut être fermée par un piston supérieur (20) qui ne peut se déplacer axialement, définissant de ce fait une chambre de brassage, lequel dispositif comprend un support supérieur (16) monté au-dessus de l'axe de la vis sans fin (4) avec une extension surplombant au-dessus du chariot (7) sous la forme d'un segment plat qui soutient le piston supérieur (20) et un tube de remplissage (21), lequel support (16) pouvant tourner librement autour de l'axe de la vis sans fin (4) entre deux positions extrêmes, une pour charger le café, dans laquelle le tube de remplissage (21) est placé du côté opposé à la cavité (9) du chariot (7) et le piston supérieur (20) est placé hors de la projection de ladite cavité (9), et une position de brassage, dans laquelle le piston est placé du côté opposé à la cavité (9) du chariot (7) et le tube de remplissage (21) est placé hors de la projection de ladite cavité (9), **caractérisé en ce que** le piston inférieur (10) se prolonge vers le bas comme un arbre tubulaire (11) qui se termine dans un épaulement inférieur (13) qui comporte une gorge circulaire (14), dans laquelle peut être logé un élément de blocage élastique (23) quand l'écrou (5) et le chariot (7) atteignent leur position la plus basse; avec l'épaulement inférieur (13) de l'axe agissant élastiquement sur l'élément de blocage (23) afin de le déformer, de sorte que l'épaulement (13) soit maintenu dans ladite gorge (14) ou libéré de celle-ci pendant que le chariot (7) pousse vers le bas l'épaulement ou pendant qu'il soulève le piston, dans tous les cas exerçant une force qui est plus grande que le frottement entre le piston (10) et la cavité (9) du chariot (7); avec les deux pistons (10,20) étant équipés de conduites correspondantes (25,26) pour l'introduction de l'eau et la sortie de l'infusion ; et avec la structure existant au-dessus du chariot (7) avec une ouverture du côté opposé à la cavité (9) du chariot, et avec le tube de remplissage (21) placé d'un côté opposé à ladite cavité (9) quand elle atteint la position de chargement du café.

2. Dispositif selon la revendication 1, **caractérisé en ce que** ledit support supérieur (16) est une partie de l'élément en forme de C (17) qui a un segment central qui chemine parallèlement à la vis sans fin (4), et des segments latéraux qui sont perpendiculaires à l'axe de la vis sans fin (4) et sont libres de tourner autour d'elle, avec le segment supérieur déterminant le déport surplombant du support supérieur (16) qui supporte le piston supérieur (20) et le tube de remplissage (21).

3. Dispositif selon la revendication 1, **caractérisé en ce que** ledit écrou (5) est constitué de deux anneaux filetés parallèles reliés par une nervure radiale externe (6).

4. Dispositif selon la revendication 1, **caractérisé en ce que** l'élément de blocage élastique (23) est constitué de deux tiges qui passent à travers une ouverture (22) de la partie inférieure (2) de la structure, située du côté opposé à l'arbre tubulaire (11) du piston inférieur (10), ayant une largeur qui est légèrement plus grande que l'épaulement inférieur (13) dudit arbre tubulaire (11), et est située à la hauteur atteinte par l'épaulement (12) quand l'écrou (5) et le chariot (7) atteignent leur position la plus basse; avec ces tiges (23) définissant une largeur d'ouverture qui est légèrement plus petite que l'épaulement d'arbre (13), et étant ainsi élastiquement déformées par ledit épaulement jusqu'à ce qu'elles atteignent sa largeur.

5. Dispositif selon la revendication 1, **caractérisé en ce que** le chariot mentionné ci-dessus (7) comporte sur sa base supérieure une guillotine (36) liée à un mécanisme d'entraînement qui déplace transversalement la guillotine (36) le long de ladite base entre une position rentrée dans laquelle elle est placée derrière la bouche de sortie de la cavité (9) du chariot (7) et une position antérieure dans laquelle elle est devant ladite bouche.

6. Dispositif selon la revendication 5, **caractérisé en ce que** le mécanisme d'entraînement de la guillotine (36) se compose d'un levier coudé (39) placé d'un côté du chariot (7), et articulé à celui-ci au niveau de son coude, et comportant au segment qui est laissé au-dessous de l'articulation un prolongement latéral qui rencontre un arrêt (43) de structure quand le chariot (7) atteint l'épaulement inférieur (13) de l'axe (11) du piston, faisant pivoter le levier (39), alors qu'à son extrémité supérieure le levier (39) est solidaire de la guillotine (36) par une fente (44) en forme d'arc, de ce fait effectuant le dernier déplacement linéairement le long de la base supérieure du chariot (7) entre ses positions rentrée et antérieure ou vice versa.

7. Dispositif selon les revendications 5 et 6, **caractérisé en ce que** la guillotine (36) est connectée au chariot (7) par des guides qui cheminent parallèlement à la base supérieure dudit chariot (7).

8. Dispositif selon les revendications 1 et 2, **caractérisé en ce que** l'écrou (5) monté sur l'axe de la vis sans fin (4) est relié à une came qui commande son mouvement, de sorte qu'il soit tourné ou se déplace suivant une ligne droite quand il atteint certaines positions.

9. Dispositif selon les revendications 1 et 8, **caractérisé en ce que** ladite came comprend une paroi approximativement semi cylindrique (30) montée autour de l'axe de la vis sans fin (4) du côté opposé au chariot (7) et coaxiale avec ladite vis sans fin (4), avec le segment central de la partie (17) en forme de C cheminant à l'extérieur et à côté de ladite paroi ; cette paroi est constituée sur la surface qui fait face à la vis sans fin (4) de deux rainures axiales (31,32) placées à différentes hauteurs, non alignées l'une par rapport à l'autre et ayant des largeurs identiques, de la gorge supérieure (31) et de la gorge inférieure (32) séparées par une fenêtre intermédiaire (33) avec une hauteur approximativement égale à celle de la nervure (6) qui relie les deux anneaux de l'écrou (5), et cette fenêtre (33) étant limitée au dessus et en dessous par des rampes hélicoïdales parallèles (34,35), avec la gorge supérieure (31) se terminant à la fenêtre au point le plus élevé de la rampe hélicoïdale supérieure (34) et la gorge inférieure (32) se terminant au plus bas point de la rampe inférieure (35), et avec la séparation angulaire entre les deux gorges axiales étant identiques à l'angle de rotation effectué par le support supérieur (16) entre les positions de chargement du café et de brassage; et avec le segment central du support en forme de C (17) comportant une gorge axiale intermédiaire (36) ayant une largeur égale à celle des gorges (31,32) de la paroi semi cylindrique (30) et d'une hauteur inférieure à la fenêtre (33) de ladite paroi (30), ladite gorge (36) traversant la fenêtre (33) pour recevoir la nervure (6) qui joint les anneaux de l'écrou (5) quand cette dite nervure (6) est du côté opposé à la gorge supérieure ou inférieure de la paroi semi cylindrique (30), permettant de ce fait à l'écrou (5) de tourner tandis qu'elle se déplace également dans un sens axial comme déterminé par les rampes hélicoïdales (34,35) qui limitent la fenêtre mentionnée ci-dessus (33) sur la partie supérieure et inférieure.
